# EUROPEAN PATENT SPECIFICATION

(11) **EP 3 506 462 B1**
(45) Date of publication and mention of the grant of the patent: **08.02.2023**
(21) Application number: 16914203.1
(22) Date of filing: 25.08.2016
(51) Int. Cl.: H02K 1/27, H02K 1/22

(54) **ROTARY ELECTRIC MACHINE**
ELEKTRISCHE DREHMASCHINE
MACHINE ÉLECTRIQUE TOURNANTE

(43) Date of publication of application: 03.07.2019
(60) Divisional application: 20151196.1
(73) Proprietor: Mitsubishi Electric Corporation, Chiyoda-ku Tokyo 100-8310 (JP)
(72) Inventor: TAKIZAWA, Yuji, Tokyo 100-8310 (JP)
(74) Representative: Hoffmann Eitle
(86) International application number: PCT/JP2016/074812
(87) International publication number: WO 2018/037529

(56) References cited:
- EP-A2- 2 696 472
- WO-A1-2013/176116
- CN-A- 104 779 721
- GB-A- 2 534 805
- JP-A- 2002 223 538
- JP-A- 2002 223 538
- JP-A- 2005 218 228
- JP-A- 2005 218 228
- JP-A- 2006 211 826
- JP-A- 2009 254 143
- JP-A- 2009 254 143
- JP-A- 2010 161 896
- JP-A- 2010 161 896
- JP-A- 2016 007 136
- US-A- 4 629 921
- US-A1- 2010 026 128
- US-A1- 2013 169 097
- US-A1- 2013 285 500
- US-A1- 2014 042 861
- US-A1- 2014 210 296
- US-A1- 2015 162 790
- US-A1- 2015 357 892

## Description

### Technical Field

The present invention relates to a rotary electric machine.

### Background Art

In Patent Literature 1, there is disclosed a rotator in which permanent magnets are embedded in a rotator core, and the rotator core is step-skewed by a predetermined angle in an axial direction. In this structure, magnets of other poles in other stages are overlapped with each other as viewed in the axial direction.

Further, in Patent Literature 2, there is disclosed a stator core which is divided into a plurality of blocks in an axial direction so as to form a step skew between the blocks, and a rotator core in which a bridge portion is formed between magnet through holes and an outer peripheral surface of the rotator core. Further, a bridge angle is equal to or larger than a skew angle.

### Citation List

### Patent Literature

[PTL 1] JP 2004-248422 A
[PTL 2] JP 5774081 B2

JP 2005-218 228 and US2015357892 disclose permanent magnet type motors comprising skewed sections. US2014042861 and GB2534805 disclose laminated rotors with laminations having a predetermined thickness.

### Summary of Invention

### Technical Problem

In the configuration disclosed in Patent Literature 1, when the number of stacked sections of the rotator core is different, it is required to change a skew angle in a magnetizing yoke configured to magnetize the rotator in accordance with the number of stacked sections. Thus, there is a problem in that a magnetizing yoke that is not skewed and can be shared regardless of the number of stacked sections cannot be used.

Further, in the configuration disclosed in Patent Literature 2, the bridge angle is large, and the magnetizing yoke that is not skewed can be used. However, a bridge width is large, and hence there is a problem in that a leakage magnetic flux flowing from one magnetic pole of the rotator to a magnetic pole having a different polarity through the bridge is increased, thereby reducing torque.

The present invention has been made in view of the above, and has an object to provide a rotary electric machine, which does not necessarily require manufacture of a magnetizing yoke in accordance with the number of stacked sections, and is capable of reducing a leakage magnetic flux through a bridge.

### Solution to Problem

In order to achieve the above-mentioned object, according to one embodiment of the present invention, there is provided a rotary electric machine having the features of claim 1.

### Advantageous Effects of Invention

According to the present invention, it is not necessarily required to manufacture a magnetizing yoke in accordance with the number of stacked sections, and it is possible to reduce a leakage magnetic flux through a bridge.

### Brief Description of Drawings

FIG. 1 is a front sectional view of a V-shaped IPM motor in a first embodiment of the present invention.
FIG. 2 is a transparent view of a rotor of the V-shaped IPM motor in the first embodiment as viewed in an axial direction.
FIG. 3 is a transparent view of a rotor that is step-skewed as an explanatory example as viewed in the axial direction. This example is not part of the present invention.
FIG. 4 is a front sectional view of a rotor obtained by changing the first embodiment into an IPM motor of a flat-plate type in an example. This example is not part of the present invention.

### Description of Embodiments

Now, an embodiment of the present invention is described with reference to the accompanying drawings. Note that, in the drawings, the same reference symbols represent the same or corresponding parts.

### First Embodiment

In a first embodiment of the present invention, description is made of a multi-layer multi-phase winding AC rotary electric machine, which includes armature windings having multi-layer and multi-phase configurations, and in which the windings share a magnetic path at a gap at which a field pole and an armature are opposed to each other. More specifically, description is made of a multi-layer multi-phase winding permanent magnet motor as an example. Further, the multi-layer multi-phase winding permanent magnet motor can be applied to an electric power steering device as one example.

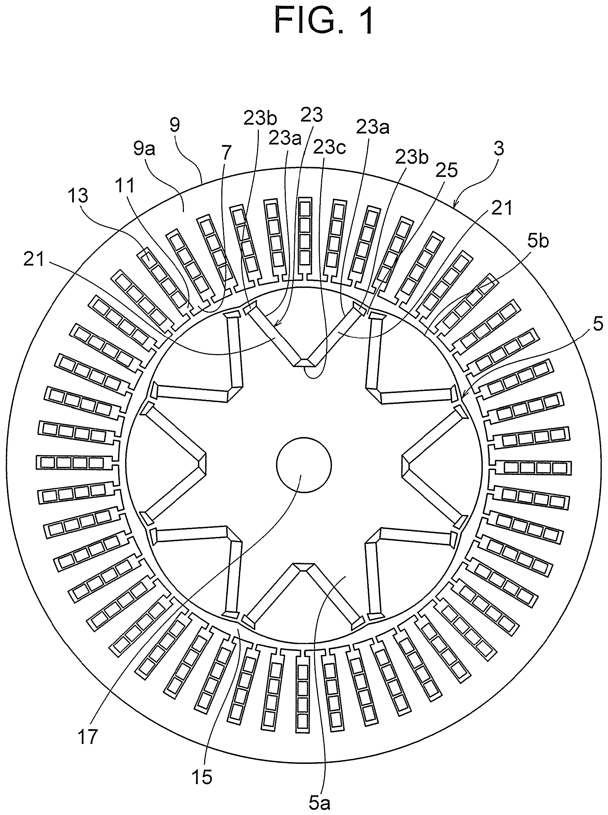

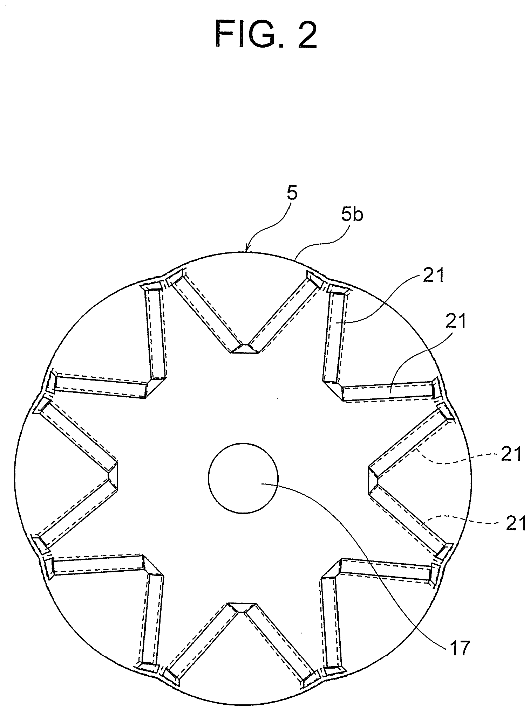

FIG. 1 is a front sectional view of a V-shaped interior permanent magnet (IPM) motor in the first embodiment of the present invention. FIG. 2 is a transparent view of a rotor of the V-shaped IPM motor in the first embodiment as viewed in an axial direction.

A multi-layer multi-phase winding permanent magnet motor being a rotary electric machine includes an armature 3 and a rotator 5. The armature 3 includes a stator core 9 and armature windings 13. The stator core 9 includes a plurality of magnetic teeth 7. The armature windings 13 are formed of multi-layer multi-phase winding groups, are wound around the teeth 7, and are accommodated in slots 11 between the teeth 7.

In FIG. 1 corresponding to a plane in which a rotation center is defined as a perpendicular line, a hole having substantially a circular shape is formed at a center of the stator core 9. Distal ends of the plurality of teeth 7 are located on one circumference. The rotator 5 is arranged in this hole. That is, the rotator 5 is arranged on an inner side of the armature 3 in a circumferential direction through a magnetic air gap 15 defined between the rotator 5 and the armature 3, and is provided so as to be rotatable about a rotation shaft 17. In the first embodiment, in other words, this magnetic air gap 15 is a portion of the hole, and is a hollow space.

Permanent magnets 21 are embedded in the rotator 5. Although detailed description is made later, a rotator core 5a has a step-skew structure with two or more stages, and those stages are arrayed in a rotation shaft direction (direction in which the rotation shaft extends, that is, direction in which the rotation center extends). Further, magnets having different polarities in different stages are arranged so as to be prevented from being overlapped with each other in the circumferential direction as viewed along the rotation shaft direction.

Now, the above-mentioned configuration is described in more detail. The stator includes a first armature winding, a second armature winding, and the stator core 9. The stator core 9 includes an annular core back 9a and the teeth 7. The annular core back 9a is formed of a magnetic material such as a magnetic steel sheet. The teeth 7 extend from the core back 9a to the inner side in the circumferential direction. Although not illustrated, for example, insulating paper is inserted between the armature windings and the stator core to secure electrical insulation.

As one example, in the first embodiment, forty-eight teeth 7 are formed in total. Therefore, the number of the slots 11 is also forty-eight. Four coils of the armature winding are accommodated in one slot.

The first armature winding is formed of three phases of a U1 phase, a V1 phase, and a W1 phase, and the second armature winding is formed of three phases of a U2 phase, a V2 phase, and a W2 phase. The armature windings are arranged in the order of the U1, U2, W1, W2, V1, and V2 phases from the first slot. The armature windings are arranged in the seventh and subsequent slots also in the order of the U1, U2, W1, W2, V1, and V2 phases, and are arranged in the same order to the forty-eighth slot.

However, for example, the armature windings are arranged so that directions of currents of the U1 phase in the first slot and the U1 phase in the seventh slot are reverse to each other. That is, the armature winding has a configuration of a distributed winding, which is wound from the first slot to the seventh slot, and the armature winding covers six teeth in total. This corresponds to an electrical angle of 180°, and a short pitch winding factor is 1. Further, the armature windings are driven at a phase difference in which electrical angles are different from each other by 30°. Thus, a distributed winding factor is 1. As a result, a winding factor is 1. Therefore, there is obtained such an effect that a motor that is reduced in size and high in torque is obtained, and that a usage amount of the permanent magnets is small as compared to a motor that is small in winding factor to achieve reduction in cost.

Two permanent magnets 21 are allocated for one pole, and the two permanent magnets 21 are arranged in a V shape in each magnetic pole. In the illustrated example, a total of sixteen permanent magnets 21 are embedded, and the rotator 5 having eight poles is described. The permanent magnets 21 are anisotropic magnets.

Eight magnet accommodating holes 23 are formed in the rotator core 5a. That is, one magnet accommodating hole 23 is allocated for one pole. In FIG. 1, the magnet accommodating holes 23 each include a pair of rectangular portions 23a, a pair of flux barrier portions 23b, and one center portion 23c. In the same pole, the pair of rectangular portions 23a extend so that an interval of portions thereof in the circumferential direction is reduced toward a radially inner side. Corresponding permanent magnets 21 are arranged in the pair of rectangular portions 23a, respectively. The one center portion 23c is located between end portions of the pair of rectangular portions 23a on the radially inner side. The pair of flux barrier portions 23b are located more on a radially outer side with respect to end portions of corresponding rectangular portions 23a on the radially outer side. That is, the flux barrier portions 23b are located between the end portions of the corresponding rectangular portions 23a on the radially outer side and an outer peripheral surface 5b of the rotator core 5a.

In FIG. 1, an outer shape of the rotator core 5a is a flower shape partially having a radius smaller than a radius of the true circle from the rotation center. Through formation of the rotator core into the flower shape, a torque ripple can be reduced, thereby obtaining a motor that is small in torque ripple.

The rotator core 5a is also formed by stacking thin sheet-like members formed of a plurality of magnetic materials such as a plurality of magnetic steel sheets in the rotation shaft direction.

The rotator core 5a has a two-step skew structure. In the two-step skew structure, stage portions of the rotator core, which have the same shape, are stacked in two stages in the rotation shaft direction. When a two-step skew of a mechanical angle of around 3.75° is formed in the rotator core, an electrical angle 12th-order component of a cogging torque ripple is reduced, thereby obtaining an advantage in that a motor that is small in clogging torque ripple is obtained to improve a steering feeling of a driver.

Magnetic pole portions of the rotator core 5a are connected to each other through a bridge 25. More specifically, the bridge 25 being a part of the rotator core 5a is present between the flux barrier portions 23b of adjacent magnetic poles . A leakage magnetic flux flows through the bridge 25 in the rotator core. Thus, a magnetic flux originally supposed to flow from the magnetic pole of the rotator to the stator through an air gap to generate torque is reduced. When a bridge width (distance between the pair of adjacent flux barrier portions 23b in the circumferential direction) is large, the leakage magnetic flux is increased, and the torque of the motor is reduced, which is not favorable for a high output motor. In contrast, when the bridge width is reduced, the leakage magnetic flux can be reduced, but the level of difficulty of press working is increased, thereby degrading productivity. In general, in the press working, a thickness in the vicinity of a punched portion is reduced due to shear drop caused during the press working unless a punching width as large as a thickness of the rotator core is secured. In this case, the bridge cannot be sufficiently held to cause distortion, and hence a shape of the bridge portion is not stabilized. Therefore, there is a negative influence in that the steering feeling of a driver is degraded due to increase in torque ripple. In the first embodiment, the bridge width is set as large as the thickness of the rotator core to achieve a configuration in which increase in output of the motor and reduction in torque ripple can be both achieved.

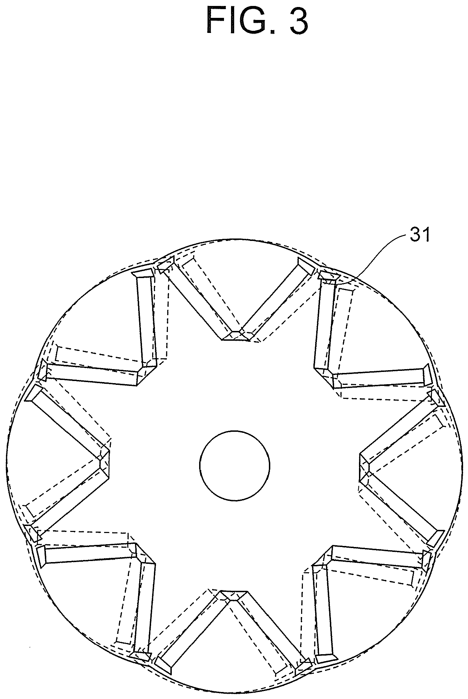

FIG. 2 is a transparent view of the rotator 5 skewed in two stages as viewed in the rotation shaft direction. In the illustrated configuration, the permanent magnets 21 having different polarities in different stages are prevented from being overlapped with each other. That is, in FIG. 2, it is found that the permanent magnets 21 of a first pole each indicated by the solid line in a relatively upper stage are arranged so as to be prevented from being overlapped with the permanent magnets 21 of a second pole each indicated by the dotted line in a relatively lower stage in the circumferential direction as viewed along the rotation shaft direction. Meanwhile, in FIG. 3, a rotator as an explanatory example is illustrated. In a configuration of this rotator, in order to set an angle that can cancel torque ripples in stages so as to reduce the torque ripples, magnets having different polarities are overlapped with each other as illustrated in FIG. 3. That is, in FIG. 3, as viewed along the rotation shaft direction, it is found that there is formed a region 31 in which the permanent magnets having different polarities in different stages are overlapped with each other in the circumferential direction. In the first embodiment, in the permanent magnet motor of a two-layer three-phase winding, energization phases of the first armature winding and the second armature winding are shifted by 30° to cancel six peaks of the torque ripples during one electrical angle cycle. It is not required to set a large step skew angle of a mechanical angle of around 7.5° (value obtained by dividing the electrical angle of 30° by the number of pole pairs of 4) so as to cancel the torque ripples, and it is only required to set a small step skew angle of around 3.75° so as to reduce twelve peaks of the torque ripples, which are the second most important. Therefore, it is relatively easy to achieve a configuration in which magnets having different polarities in different stages are prevented from being overlapped with each other. In the motor in the explanatory example, in order to set a step skew angle of around 7.5°, it is required to reduce the width of the magnetic pole. Thus, the magnet amount is reduced, and the torque is reduced, which is not favorable for the high output motor.

As described above, according to the first embodiment, in the permanent magnet motor in which the rotator core is step-skewed in the axial direction, and the magnetic poles of the rotator are formed of the rotator core, when the torque or the output of the motor is to be changed by changing the number of stacked sections of the rotator core, it is not required to manufacture a magnetizing yoke in accordance with the number of stacked sections, and a magnetizing yoke having the same specification can be shared regardless of the number of stacked sections. Thus, reduction in cost of a manufacturing device and reduction in loss of production efficiency due to a setup operation of the magnetizing yoke are achieved, thereby being capable of achieving mass production at low cost.

In addition, the leakage magnetic flux through the bridge can be reduced while avoiding distortion or deformation during the press working at the width of the bridge of the rotator core, which is configured to connect the magnetic poles having different polarities at the rotator outer peripheral portion. That is, an object is to enable easy production of a high output motor different in motor output due to a difference in motor length.

Further, when the rotary electric machine of the present invention is implemented as a permanent magnet motor for electric power steering, in the permanent magnet motor for electric power steering, assist torque with respect to steering of a driver differs for each of vehicle types having different vehicle weights. Therefore, in motors having the same sectional shape, it is required to adjust torque or output by changing the motor length. Further, in an in-vehicle motor, the motor weight affects a fuel economy. Thus, a motor that is reduced in weight and high in output is demanded. Therefore, in the permanent magnet motor in which the rotator core is step-skewed in the axial direction, and the magnetic poles of the rotator are formed of the rotator core, when the torque or the output of the motor is to be changed by changing the number of stacked sections of the rotator core, it is not required to manufacture a magnetizing yoke in accordance with the number of stacked sections, and the magnetizing yoke having the same specification can be shared regardless of the number of stacked sections. With this, reduction in cost of a manufacturing deice and reduction in loss of production efficiency due to a setup operation of the magnetizing yoke are achieved, thereby being capable of achieving mass production at low cost.

Although the details of the present invention are specifically described above with reference to the preferred embodiment, it is apparent that persons skilled in the art may adopt various modifications based on the basic technical concepts and teachings of the present invention.

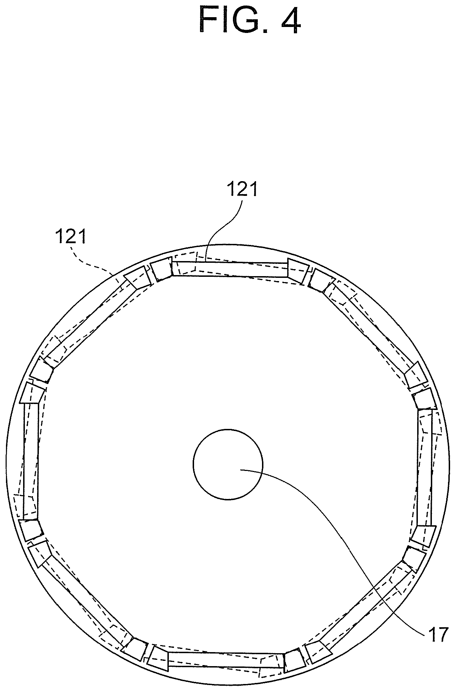

For example, even in a rotary electric machine using permanent magnets 121 of a flat plate shape as illustrated in FIG. 4, effects similar to those of the above-mentioned first embodiment are obtained.

### Reference Signs List

3 armature, 5 rotator, 5a rotator core, 7 tooth, 11 slot, 13 armature winding, 15 magnetic air gap, 17 rotation shaft, 21, 121 permanent magnet, 25 bridge

## Claims

1. A rotary electric machine, comprising:
an armature (3); and
a rotator (5),
wherein the armature (3) includes:
a stator core (9) including 48 magnetic teeth (7); and
armature windings (13), which are formed of multi-layer multi-phase winding groups, are wound around the teeth (7), and are four coils accommodated in each of the slots (11) between the teeth (7),
wherein the rotator (5) is arranged through a magnetic air gap (15) defined between the rotator (5) and the armature (3), and is provided so as to be rotatable about a rotation shaft (17),
wherein the rotator (5) having eight poles includes a rotator core (5a), and two anisotropic permanent magnets (21, 121) are embedded in the rotator core (5a) for each pole, with each pole being arranged in a V-shape,
wherein the rotator core (5a) has a step-skew structure with two stages in an axial direction, and
wherein magnets having different polarities in different stages are arranged so as to be prevented from being overlapped with each other in a circumferential direction as viewed along the rotation shaft direction by having a skew mechanical angle of around 3.75°, so that an electrical angle 12th order component of a cogging torque is reduced,
wherein the rotator core (5a) is formed by stacking a plurality of sheet-like members in the rotation shaft direction, wherein magnetic pole portions of the rotator core (5a) are connected to each other through a bridge (25), and
wherein a width of the bridge is equal to a thickness of the sheet-like members of the rotator core (5a),
the bridge width being the distance between a pair of adjacent flux barrier portions (23b) of adjacent magnetic poles in the circumferential direction.

## Patentansprüche

1. Rotierende elektrische Maschine, die Folgendes aufweist:
einen Anker (3); und
einen Rotator (5),
wobei der Anker (3)
einen Statorkern (9) mit 48 magnetischen Zähnen (7) aufweist;
und Ankerwicklungen (13) aufweist, die aus mehrlagigen mehrphasigen Wicklungsgruppen ausgebildet sind, um die Zähne (7) gewickelt sind und vier Spulen sind, die in jedem der Schlitze (11) zwischen den Zähnen (7) aufgenommen sind;
wobei der Rotator (5) durch einen magnetischen Luftspalt (15), der zwischen dem Rotator (5) und dem Anker (3) definiert ist, angeordnet ist und so vorgesehen ist, dass er um eine Rotationswelle (17) drehbar ist,
wobei der Rotator (5) mit acht Polen einen Rotatorkern (5a) aufweist und für jeden Pol zwei anisotrope Permanentmagnete (21, 121) in den Rotatorkern (5a) eingebettet sind, wobei jeder Pol in einer V-Form angeordnet ist,
wobei der Rotatorkern (5a) eine schrittweise verdrehte Struktur mit zwei Abschnitten in einer axialen Richtung aufweist, und
wobei Magnete mit unterschiedlichen Polaritäten in unterschiedlichen Abschnitten so angeordnet sind, dass verhindert wird, dass sie sich in einer Umfangsrichtung, gesehen entlang der Richtung der Rotationswelle, überlappen, indem sie einen mechanischen Schrägstellungswinkel von etwa 3,75° aufweisen, so dass eine elektrische Winkelkomponente zwölfter Ordnung eines Rastmoments reduziert wird,
wobei der Rotatorkern (5a) durch Stapeln einer Vielzahl von blattartigen Elementen in der Rotationswellenrichtung ausgebildet ist, wobei Magnetpolabschnitte des Rotatorkerns (5a) miteinander mittels einer Brücke (25) verbunden sind, und
wobei eine Breite der Brücke gleich einer Dicke der blattartigen Elemente des Rotatorkerns (5a) ist,
wobei die Brückenbreite der Abstand zwischen einem Paar benachbarter Flusssperrabschnitte (23b) von benachbarten Magnetpolen in der Umfangsrichtung ist.

## Revendications

1. Machine électrique rotative, comprenant :
un induit (3) ; et
un rotateur (5),
dans laquelle l'induit (3) inclut :
un noyau de stator (9) incluant 48 dents magnétiques (7) ; et
des enroulements d'induit (13), qui sont constitués de groupes d'enroulements multicouches et multiphases, sont enroulés autour des dents (7) et sont quatre bobines logées dans chacun des espaces (11) entre les dents (7),
dans laquelle le rotateur (5) est agencé à travers un entrefer magnétique (15) défini entre le rotateur (5) et l'induit (3) et est prévu de manière à pouvoir tourner autour d'un arbre de rotation (17), dans laquelle le rotateur (5) comportant huit pôles inclut un noyau de rotateur (5a), et deux aimants permanents anisotropes (21, 121) sont incorporés dans le noyau de rotateur (5a) pour chaque pôle, chaque pôle étant agencé en forme de V,
dans laquelle le noyau de rotateur (5a) présente une structure à paliers obliques avec deux étages dans une direction axiale, et
dans laquelle des aimants présentant des polarités différentes dans des étages différents sont agencés de manière à ne pas pouvoir se chevaucher dans une direction circonférentielle en vue dans la direction de l'arbre de rotation en présentant un angle mécanique oblique d'environ 3,75°,
de sorte qu'une composante de 12e ordre d'angle électrique d'un couple de crantage soit réduite,
dans laquelle le noyau de rotateur (5a) est constitué par empilement d'une pluralité d'éléments en forme de feuille dans la direction de l'arbre de rotation, dans laquelle des parties de pôle magnétique du noyau de rotateur (5a) sont reliées les unes aux autres par un pont (25), et
dans laquelle une largeur du pont est égale à une épaisseur des éléments en forme de feuille du noyau de rotateur (5a),
la largeur du pont étant la distance entre une paire de parties de barrière de flux (23b) adjacentes de pôles magnétiques adjacents dans la direction circonférentielle.
